# EUROPÄISCHE PATENTSCHRIFT

(11) **EP 0 909 204 B1**
(45) Veröffentlichungstag und Bekanntmachung des Hinweises auf die Patenterteilung: **18.09.2002**
(21) Anmeldenummer: 97929190.3
(22) Anmeldetag: 16.06.1997
(51) Int. Cl.: B01D 3/00, B01J 19/32, B01J 37/02, B01J 37/34

(54) **VERFAHREN ZUR KATALYTISCHEN DESTILLATION**
CATALYTIC DISTILLATION PROCESS
PROCEDE DE DISTILLATION CATALYTIQUE

(30) Priorität: 17.06.1996 DE 19624130
(43) Veröffentlichungstag der Anmeldung: 21.04.1999
(73) Patentinhaber: BASF AKTIENGESELLSCHAFT, 67056 Ludwigshafen (DE)
(72) Erfinder: BRÖCKER, Franz, Josef, D-67061 Ludwigshafen (DE); FLICK, Klemens, D-76863 Herxheim (DE); FREIRE ERDBRÜGGER, Cristina, D-67240 Bobenheim-Roxheim (DE); KAIBEL, Gerd, D-68623 Lampertheim (DE); MEYER, Gerald, D-67071 Ludwigshafen (DE); MÜLLER, Hans-Joachim, D-67269 Grünstadt (DE); POLANEK, Peter, D-69469 Weinheim (DE); SCHWAB, Ekkehard, D-67434 Neustadt (DE)
(74) Vertreter: Isenbruck, Günter, Dr.
(86) Internationale Anmeldenummer: EP9703122
(87) Internationale Veröffentlichungsnummer: WO97048466

(56) Entgegenhaltungen:
- EP-A- 0 412 415
- EP-A- 0 556 025
- EP-A- 0 564 830

## Beschreibung

Die Erfindung betrifft ein Verfahren zur katalytischen Hydrierung, bei dem eine heterogen-katalytische Hydrierung mit einer Destillation oder Rektifikation an einer Katalysatorpackung kombiniert ist. Die Erfindung betrifft ferner die Verwendung einer Katalysatorpackung in Verfahren zur katalytischen Destillation.

Die katalytische Umsetzung von Stoffen bei gleichzeitiger destillativer Trennung der Reaktionsprodukte wird im Raffineriebereich umfangreich angewendet. Dabei werden Cracker-Ströme selektiv hydriert und aufgetrennt.

EP-A1-0 556 025 betrifft die selektive Hydrierung von C₅-Strömen. Es wird die selektive Hydrierung eines C₅-Stroms zur Herstellung von tert.-Amylmethylether (TAM) beschrieben. Bei der Hydrierung tritt wenig bis keine Sättigung der Monoolefine auf. Ein Teil der Monoolefine im Strom wird isomerisiert. Diolefine werden zu Monoolefinen hydriert, indem ein Strom aus leichtem Naphtha und Wasserstoff über eine Destillationsstruktur geleitet wird, in der ein Katalysator, der Palladiumoxid auf Aluminiumoxid enthält, enthalten ist. Der Katalysator ist dabei in eine Mehrzahl von Taschen aus Gewebe gefüllt, die durch ein Gerüst von offenmaschigem Stahldrahtgeflecht in helixförmiger Anordnung gehalten wird. Als Gewebe wird vorzugsweise Glasfasergewebe oder Teflon verwendet.

US-PS 4 443 559 betrifft eine katalytische Destillationsstruktur. Die Struktur dient sowohl als Katalysator als auch als Destillationspackung. In der Struktur ist das katalytische Material mit einer Teilchengröße im Bereich von 0,25 bis 1 mm in porösen Behältnissen enthalten, wie Gewebebehältnissen, Maschendraht oder polymeren Geweben. Diese Katalysatortaschen sind so in einer Matrix angeordnet, daß mindestens 70 Volumen-% an freiem Raum verbleiben, so daß sich das Katalysatorbett ausdehnen und kontrahieren kann. Eine Mehrzahl von katalytischen Reaktionen wird angegeben.

US-PS 4 242 530 betrifft ein Verfahren zur Trennung von Isobuten aus C₄-Strömen. Das Isobuten wird dabei katalytisch polymerisiert bzw. dimerisiert und von dem Sumpf der Kolonne abgetrennt. Die Destillationskolonne wird mit einem sauren Katalysator auf einem Träger beladen. Der Katalysator ist in Gewebetaschen eingehüllt, die wiederum von einem offenmaschigen Stahldrahtgestrick umhüllt sind. Dieser Maschendraht bildet den Träger für den Katalysator und erlaubt das Durchtreten des Dampfs durch die Katalysatortaschen. Insbesondere wird ein saurer Kationenaustauscher Festbettkatalysator verwendet.

EP-A1-0 631 813 betrifft einen katalysierenden Festbettreaktor. Der Festbettreaktor besteht aus stapelartig angeordneten Packungselementen, die kissenartige Packungsteile bilden mit für das Destillationsmedium durchlässigen Wänden. Diese abgschlossenen kissenartigen Packungsteile weisen das Katalysatormaterial in Form eines Granulats auf. Das Granulat wird beispielsweise über eine vibrierende Vorrichtung von oben in die Packungselemente eingefüllt.

EP-B1-0 201 614 betrifft einen Reaktor zum Durchführen von heterogenen, katalysierten chemischen Reaktionen. Der Katalysator besteht dabei aus parallel zur Hauptströmungsachse des Reaktors angeordneten, gewellten Platten, deren Wellung schräg zur Hauptströmungsachse geneigt und bei benachbarten Platten entgegengesetzt gerichtet ist. Zwischen benachbarten Platten wird ein bandförmiger, mindestens teilweise gewellter Katalysatorkörper entfernbar eingefügt. Der Katalysatorkörper kann dabei beispielsweise aus Glasmetall, Drahtgeflecht oder Drahtgewirk gebildet sein. Der Katalysatorkörper kann als ganzer aus einem katalytisch wirksamen Material bestehen oder oberflächlich katalytisch aktiviert sein.

EP-B1-0 068 862 betrifft ein Packungsmodul für einen Katalysator mit einem geordneten Bett. Das Katalysatorbett umfaßt alternierende Lagen von ebenen und gewellten Bahnen, die zu einer Rolle aufgewickelt sind. Das Bett weist dabei Fluiddurchläße zwischen den ebenen und gewellten Bahnen auf. Die ebene Bahn umfaßt ein gewebtes, gewirktes oder gefilztes Tuch eines textilen dochtartigen Materials, das hydrophil bezüglich der Flüssigkeit in einer auszuführenden Gas-Flüssigkeits-Transferreaktion ist. Die gewellte Bahn umfaßt ein offenmaschiges Material, das hydrophob bezüglich der Flüssigkeit ist und Katalysator-Kristallite aus mindestens einem Element der VIII. Gruppe des Periodensystems enthalten kann. Die Kristallite sind dabei in der porösen Matrix dispergiert und teilweise dabei umschlossen, so daß die poröse Matrix im wesentlichen den Kontakt der Flüssigkeit mit den Kristalliten sperrt, jedoch den Kontakt zum Gas unter Flüssigkeit in Dampfform ermöglicht. Als solche Matrix wird Polytetrafluorethylen mit einem Katalysator aus Platinkristalliten beschrieben, die von Kohlenstoffpartikeln mit großer Oberfläche getragen sind. Die katalytisch aktiven Pt/C Teilchen werden dabei in Form einer wässrigen Suspension von Pt/C-Pulver auf die hydrophobe Polymermasse aufgebracht und durch Trocknen bei 60 °C bis 200 °C und anschließendes Sintern bei 365 °C fixiert. Als Gas-Flüssigkeits-Transferreaktion wird der Wasserstoffisotopenaustausch zwischen Wasserstoffgas und flüssigem Wasser angeführt.

EP-B1-0 433 223 betrifft Katalysatorkörper und einen Reaktor für heterogene Reaktionsführung. Der Katalysatorkörper weist dabei eine Trägerstruktur in Form statischer Mischerelemente auf, welche aus einem Metallskelett geformt sind oder aus einer Keramikschicht bestehen können. Auf diese Trägerstruktur ist eine Washcoat-Beschichtung aufgebracht. An der Oberfläche der Washcoat-Beschichtung befindet sich der eigentliche Katalysator. Die Trägerstruktur kann aus einem Stück bestehen. Spezifische heterogene katalytische Reaktionen sind nicht beschrieben.

Washcoat-beschichtete Katalysatorkörper neigen bei mechanischer Beanspruchung zur Zerstörung der aufgetränkten Schichten, die sich aufgrund mangelhafter Haftfestigkeit ablösen können.

Bei den Katalysatoren mit granulierten Katalysatorschüttungen in Packungselementen wie Gewebetaschen tritt Abrieb auf, insbesondere beim Befüllen der katalytischen Destillationsvorrichtung sowie bei Stößen während des Betriebs. Zudem treten in Schüttungen höhere Druckverluste als in der Umgebung auf, was zu schlechter radialer Vermischung im Reaktor, zu inhomogenen Konzentrationsprofilen und häufig zu unerwünschtem Schlupf führt.

EP-A 0 412 415 beschreibt Katalysatorgewebe und Katalysatorfolien aus Edelstahl, die mit Palladium beschichtet sind, und deren Verwendung als Katalysatorpackungen zur partiellen Hydrierung von Dreifachbindungen zu olefinischen Doppelbindungen. Ein Verfahren der katalytischen Destillation wird nicht beschrieben.

EP-A 0 564 830 beschreibt die Herstellung von monolithischen Trägerkatalysatoren in Form von mit einer Aktivkomponente beschichteten Metallgeweben oder Metallfolien und deren Verwendung für Hydrierungen. Eine katalytische Destillation wird nicht beschrieben.

Eine Aufgabe der vorliegenden Erfindung ist die Bereitstellung eines Katalysators für die katalytische Destillation, bei der eine heterogen-katalytische Reaktion mit einer Destillation oder Rektifikation an einer Katalysatorpackung kombiniert ist.

Eine weitere Aufgabe der Erfindung ist die Bereitstellung eines geeigneten Katalysatorsystems für die katalytische Destillation, das die vorstehend genannten Nachteile vermeidet.

Eine weitere Aufgabe der Erfindung ist die Bereitstellung eines Reaktors zur katalytischen Destillation, in dem die Katalysatorpackung einfach austauschbar ist.

Eine weitere Aufgabe der Erfindung ist die Bereitstellung eines Verfahrens zur katalytischen Hydrierung.

Die Aufgaben werden erfindungsgemäß gelöst durch die Verwendung einer Katalysatorpackung, die herstellbar ist durch Aufdampfen und/oder Sputtern mindestens einer als Katalysator und/oder Promotor aktiven Substanz auf Gewebe, Gestricke oder Folien als Trägermaterial, in einem Verfahren zur katalytischen Destillation, bei dem eine heterogen-katalytische Reaktion mit einer gleichzeitigen Destillation oder Rektifikation an der Katalysatorpackung kombiniert ist. Bevorzugte Ausführungsformen gehen aus den Unteransprüchen hervor. Zudem werden die Aufgaben gelöst durch einen Reaktor zur katalytischen Destillation, der eine Destillationskolonne umfaßt, die mit einer wie vorstehend beschriebenen Katalysatorpackung gepackt ist. Weiterhin werden die Aufgaben gelöst durch ein Verfahren zur katalytischen Hydrierung unter Verwendung der Katalysatorpackung.

### Trägermaterial

Als Trägermaterial für die erfindungsgemäß eingesetzten Katalysatoren können eine Vielzahl von Folien, Gestricken und Geweben, wie auch Gewirken eingesetzt werden. Als Drahtgewebe kommen gemäß einer Ausführungsform der Erfindung Gewebe aus webbaren Metalldrähten, wie Eisen, Federstahl, Messing, Phosphorbronze, Reinnickel, Monel, Alumminium, Silber, Neusilber, Nickel, Chromnickel, Chromstahl, nicht rostenden, säurebeständigen und hochhitzebeständigen Chromnickelstählen sowie Titan in Betracht.

Ebenfalls können Gewebe aus anorganischen Materialien verwendet werden, wie aus Al₂O₃ und/oder SiO₂.

Auch synthetische Drähte und Gewebe aus Kunststoffen sind gemäß einer Ausführungsform der Erfindung einsetzbar. Beispiele sind Polyamide, Polyester, Polyvinyle, Polyolefine wie Polyethylen, Polypropylen, Polytetrafluorethylen und andere zu Geweben verarbeitbare Kunststoffe.

Bevorzugte Trägermaterialien sind Metallfolien oder Metallgewebe, wie beispielsweise Edelstähle mit den Werkstoffnummern 1.4767, 1.4401, 2.4610, 1.4765, 1.4847, 1.4301 usw. Die Bezeichnung dieser Werkstoffe mit den genannten Werkstoffnummern folgt den Angaben der Werkstoffnummern in der "Stahleisenliste", herausgegeben vom Verein Deutscher Eisenhüttenleute, 8. Auflage, Seiten 87, 89 und 106, Verlag Stahleisen mbH, Düsseldorf, 1990. Der Werkstoff der Werkstoffnummer 1.4767 ist auch unter dem Namen Kanthal bekannt.

Die Metallfolien und Metallgewebe eignen sich besonders gut, da sie vor der Beschichtung mit katalytischen aktiven Verbindungen bzw. Promotoren durch eine Temperung an der Oberfläche aufgerauht werden können. Dazu werden die metallischen Träger bei Temperaturen von 400 bis 1100 °C, vorzugsweise 800 bis 1000 °C für 0,5 bis 24 Stunden, vorzugsweise 1 bis 10 Stunden in sauerstoffhaltiger Atmosphäre wie Luft erhitzt. Durch diese Vorbehandlung kann gemäß einer Ausführungsform der Erfindung die Aktivität des Katalysators gesteuert bzw. erhöht werden.

### Beschichtung der Katalysatorträger

Die erfindungsgemäß verwendbaren Katalysatorträger, insbesondere die Gewebe, Gestricke und Folien können mittels einer Vakuumaufdampftechnik mit "dünnen Schichten" von katalytisch aktiven Verbindungen und Promotoren beschichtet werden. Als "dünne Schichten" werden - Belegungen im Dicken- bereich zwischen wenigen Å (10⁻¹⁰m) und maximal 0,5 µm bezeichnet. Als Vakuumaufdampftechniken können erfindungsgemäß verschiedene Verfahren angewendet werden. Beispiele sind die thermische Verdampfung, die Flash-Verdampfung, die Kathodenzerstäubung (Sputtern) sowie die Kombination von thermischer Verdamfung und Kathodenzerstäubung. Die thermische Verdampfung kann dabei durch direkte oder indirekte elektrische Beheizung erfolgen.

Eine Verdampfung mittels Elektronenstrahl kann ebenfalls erfindungsgemäß eingesetzt werden. Dazu wird die zu verdampfende Substanz in einem wassergekühlten Tiegel mit einem Elektronenstrahl oberflächlich so stark erhitzt, daß selbst hochschmelzende Metalle und Dielektrika verdampft werden. Durch gezielte Zusätze geeigneter Mengen reaktiver Gase zum Restgas können gemäß einer Ausführungsform der Erfindung beim Schichtaufbau durch Aufdampftechniken chemische Reaktionen bewirkt werden. Durch geeignete Reaktionsführung können somit Oxide, Nitride oder Carbide auf dem Träger erzeugt werden.

Mit dem erfindungsgemäßen Verfahren können die Träger, insbesondere die Gewebe, Gestricke und Folien in einer Vakuumbedampfungsanlage diskontinuierlich oder kontinuierlich bedampft werden. Beispielsweise erfolgt die Bedampfung, indem die aufzubringende katalytisch aktive Komponente bzw. Verbindung, beispielsweise ein Edelmetall, im Vakuum bei 10⁻² bis 10⁻¹⁰ Torr, vorzugsweise 10⁻⁴ bis 10⁻⁸ Torr mittels eines Elektronenstrahls so stark erhitzt wird, daß das Metall aus dem wassergekühlten Tiegel heraus verdampt und sich auf dem Träger niederschlägt. Das Trägergewebe wird dabei zweckmäßigerweise so angeordnet, daß ein möglichst großer Teil des Dampfstroms auf dem Träger kondensiert. Durch eine eingebaute Wickelmaschine können die Gewebe, Gestricke und Folien dabei kontinuierlich beschichtet werden. Erfindungsgemäß bevorzugt ist das kontinuierliche Sputtern in einer air to air-Anlage.

Geignete Parameter und Bedingungen der Vakuumaufdampftechniken können beispielsweise dem "Handbook of Thin Film Technology", Verlag Maissel und Glang, McGraw Hill, New York, 1970, "Thin Film Processes" von J.L. Vossen und B. Kern, Academie Press, New York, sowie der EP-A0 198 435 entnommen werden. Aus EP-A2-0 198 435 geht die Herstellung eines Katalysatornetzpackets durch Bedampfung von Edelstahlgewebe mit Platin bzw. Platin und Rhodium hervor.

Bei der erfindungsgemäßen Herstellung der Katalysatoren durch Vakuumaufdampftechniken sollen möglichst ungeordnete und gestörte polykristalline Teilchen auf dem Träger erzeugt werden, bei denen sich der überwiegende Teil der Atome in der Oberfläche befindet. Somit unterscheidet sie sich von den bekannten Aufdampftechniken in der Optik- und Elektroindustrie, bei denen eine hohe Reinheit der Träger- und Aufdampfmaterialien sichergestellt werden muß und eine vorbestimmte Kondensationstemperatur am Träger sowie eine bestimmte Aufdampfrate eingestellt werden muß.

Beim erfindungsgemäßen Verfahren können ein oder mehrere katalytisch aktive Verbindungen bzw. Promotoren aufgedampft werden.

Die Beläge liegen gemäß einer Ausführungsform der Erfindung vorzugsweise im dicken Bereich von 0,2 nm bis 100 nm, besonders bevorzugt 0,5 nm bis 20 nm.

Gemäß einer Ausführungsform der Erfindung werden als katalytisch aktive Verbindungen die Elemente der I. und/oder VII. und/oder VIII. Nebengruppe des Periodensystems der Elemente verwendet. Promotoren können erfindungsgemäß beispielsweise ausgewählt sein aus den Elementen der IV., V., VI. Hauptgruppe sowie der II., III., VI., VII. Nebengruppe des Periodensystems der Elemente.

Als Promotoren werden gemäß einer Ausführungsform der Erfindung seltene Erdmetalle verwendet.

Beispiele erfindungsgemäßer katalytisch aktiver Elemente sind Kupfer, Silber, Gold, Rhenium, Ruthenium, Kobalt, Rhodium, Nickel, Palladium und/oder Platin sowie Gemische dieser Elemente. Beispiele für Promotoren sind Blei, Zinn, Silicium, Zink, Cadmium, Titan, Zirkonium und deren Gemische.

Das beschichte Trägermaterial kann nach dem Beschichten getempert werden, beispielsweise ein mit Palladium beschichtetes Trägermaterial bei Temperaturen von 200 bis 800 °C, vorzugsweise 300 bis 700 °C für 0,5 bis 2 Stunden.

Nach der Herstellung des Katalysators kann dieser, falls erwünscht oder erforderlich, mit Wasserstoff bei Temperaturen von 20 bis 250 °C, vorzugsweise 100 bis 200 °C reduziert werden. Diese Reduktion kann auch vorzugsweise im Reaktor selbst durchgeführt werden.

Statt eines Promotors kann auch ein Inhibitor aufgedampft werden, falls dies für die jeweilige katalytische Destillation erforderlich ist.

Gemäß einer Ausführungsform der Erfindung können die Katalysatoren systematisch aufgebaut werden, beispielsweise in einer Bedampfungsanlage mit mehreren verschiedenen Verdampfungsquellen. So kann beispielsweise zunächst eine Oxidschicht oder durch reaktives Verdampfen eine Haftschicht auf den Träger aufgebracht werden. Auf diese Grundschicht lassen sich katalytisch aktive Komponenten und Promotoren in mehreren Wechselschichten aufdampfen. Durch Einlaß eines reaktiven Gases in den Rezipienten bei der Aufdampfung können Promotorschichten aus Oxiden und anderen Verbindungen erzeugt werden. Auch Temperschritte können zwischen/oder nachgeschaltet werden.

Die erfindungsgemäß durch Aufdampfen hergestellten Katalysatoren, insbesondere Katalysatorgewebe, Katalysatorgestricke und Katalysatorfolien weisen eine sehr gute Haftfestigkeit der katalytisch aktiven Verbindungen bzw. Promotoren auf. Deshalb können sie verformt, geschnitten und beispielsweise zu monolithischen Katalystorelementen verarbeitet werden, ohne daß sich die katalytischen aktiven Verbindungen bzw. Promotoren ablösen. Aus den erfindungsgemäßen Katalysatorgeweben, Katalysatorgestricken und Katalysatorfolien lassen sich beliebig geformte Katalysatorpackungen für eine Reaktionskolonne bzw. Destillationskolonne herstellen. Es lassen sich Katalysatorpackungselemente mit unterschiedlichen Geometrien herstellen, wie sie aus der Destillations- und Extraktionstechnik bekannt sind. Beispiele vorteilhafter erfindungsgemäßer Katalysatorpackungsgeometrien die den Vorteil eines geringen Druckverlusts im Betrieb bieten, sind solche der Bauart Montz A 3 und Sulzer BX, DX und EX. Ein Beispiel einer erfindungsgemäßen Katalysatorgeometrie aus Katalysatorfolien bzw. Katalysatorstreckmetallfolien sind die des Typs Montz BSH.

Die pro Volumeneinheit verarbeitete Katalysatormenge, insbesondere Katalysatorgewebemenge, Katalysatorgestrickmenge bzw. Katalysatorfolienmenge läßt sich in einem weiten Bereich steuern, wodurch sich eine unterschiedliche Größe der Öffnungen bzw. Kanalbreiten im Katalysatorgewebe, Katalysatorgestrick bzw. in der Katalysatorfolie ergibt. Durch entsprechende Auswahl der Menge an Katalysatorgewebe, Katalysatorgestrick bzw. Katalysatorfolie pro Volumeneinheit kann der maximale Druckverlust im Destillationsreaktor eingestellt werden und somit der Katalysator an experimentelle Vorgaben angepaßt werden.

Vorzugsweise weist der erfindungsgemäß eingesetzte Katalysator eine Monolith-Form auf, wie sie beispielsweise beschrieben ist in EP-A2-0 564 830. Weitere geeignete Katalysatoren sind beschrieben in der EP-A1-0 218 124 und der EP-A1-0 412 415.

### KATALYTISCHE DESTILLATION

Die erfindungsgemäßen Katalysatorpackungen können in katalytischen Destillationsreaktionen eingesetzt werden. Durch Einstellung der Katalysatordichte pro Volumen durch entsprechende Formung der Katalysatorpackung, etwa in Monolithen, kann das gewünschte Druckprofil in der katalytischen Destillationsvorrichtung eingestellt werden. Durch die Menge der aufgedampften katalytisch aktiven Verbindungen bzw. Promotoren bzw. Inhibitoren kann das gewünschte Maß an Reaktivität des Katalysators für die jeweilige Umsetzung eingestellt werden. Die katalytische Reaktion wird während einer gleichzeitig stattfindenden Destillation oder Rektifikation des Reaktionsgemisches an einer Katalysatorpackung durchgeführt, wie sie vorstehend beschrieben ist.

Unter "katalytische Destillation" versteht man eine chemische Reaktion, die in einer geeigneten Vorrichtung kombiniert ist mit einer Destillation oder Rektifikation. Die Umsetzung wie auch die Destillation oder Rektifikation erfolgen im wesentlichen gleichzeitig an einer heterogenen Katalysatorpakkung, die die chemische Reaktion katalysiert. Bei der chemischen Reaktion werden chemische Verbindungen an der Katalysatorpackung umgewandelt in andere chemische Verbindungen, beispielsweise durch Aufnahme von anderen chemischen Verbindungen, wie etwa durch Aufnahme von Wasserstoff bei der Hydrierung. Die chemische Reaktion an der Katalysatorpackung läuft dabei heterogen ab. Die chemische Reaktion läuft derart ab, daß mindestens eine Komponente, die im Reaktionsgemisch bei der Umsetzung vorliegt, bei bzw. unmittelbar nach der Umsetzung abdestilliert wird aus dem Reaktionsgemisch. Es erfolgt also gleichzeitig eine chemische Umsetzung und eine Stofftrennung. Die bei der chemischen Umsetzung anfallenden Reaktionsprodukte können dabei abdestilliert werden, oder im Sumpf der Destillation anfallen.

Gemäß einer Ausführungsform der Erfindung werden zwei unterschiedliche chemische Verbindungen an der Katalysatorpackung zu mindestens einer weiteren chemischen Verbindung umgesetzt. Dies ist beispielsweise bei der Hydrierung der Fall.

### KATALYTISCHE HYDRIERUNG

Die Erfindung betrifft auch ein Verfahren zur Hydrierung. Die Hydrierung wird dabei während einer gleichzeitig stattfindenden Destillation oder Rektifikaiton eines Hydriergemisches in einer Katalysatorpackung durchgeführt, wie sie vorstehend beschrieben ist.

### REAKTOR

Die Erfindung betrifft ebenfalls einen Reaktor zur katalytischen Destillation, der eine Destillationskolonne umfaßt, die gepackt ist mit einer Katalysatorpackung, wie sie vorstehend beschrieben. Dieser Reaktor kann für die vorstehend beschriebenen Reaktionen verwendet werden. Er weist den Vorteil auf, daß kein Abrieb der Katalysatorpackung beim Befüllen und beim Betrieb des Reaktors auftritt, daß die Katalysatorpackungen einfach ausgetauscht werden können und ein Betrieb des Reaktors mit einem minimalen Druckverlust möglich ist.

Die Erfindung wird nachstehend anhand von Beispielen näher erläutert.

### BEISPIEL 1:

Drahtgewebe in Leinenbindung aus dem Werkstoff Nr. 1.4767 mit einer Maschenweite von 0,18 m und einem Drahtdurchmesser von 0,112 mm wurde 5 Stunden bei 900 °C an der Luft erhitzt. Anschließend wurde das so behandelte Trägergewebe in einer Elektronenstrahlbedampfungsanlage beidseitig mit 6 nm Palladium bedampft. Die Schichtdicke wurde mittels eines Schwingquarzes gemessen und die Aufdampfrate mit dem Schwingquarz gesteuert. Die aufgedampfte Palladiummenge betrug 138 mg/m². Aus diesem Katalysatorgewebe wurden monolithische Körper geformt. Dazu wurde mittels einer Zahnradwalze ein Teil des Gewebes gewellt. Dieses gewellte Gewebe wurde mit glattem Gewebe zusammengelegt und aufgewickelt. Man erhielt so monolithische Formkörper, die durch Punktschweißen gefestigt wurden.

Es wurden sodann 2 Katalysatormonolithe von je 20 cm Höhe und 2 cm Durchmesser aus 0,112 m² Katalysatorgewebe gefertigt und mit einer Gewebedichte von 1,79 m²/l entsprechend 0,247 g Pd/l in eine katalytische Destillationseinrichtung eingebaut.

### BEISPIEL 2:

Ein glattes Edelstahlgewebe (Werkstoff Nr. 1.4767) mit einer Maschenweite von 180 µ und einem Drahtdurchmesser von 110 µ wurde im Ultraschallbad gereinigt und anschließend 7 Stunden bei 900 °C an der Luft getempert. Ein 20 cm breiter Gewebestreifen wurde auf die in einer Ultrahochvakuum-Bedampfungsanlage installierte Wickelvorrichtung aufgespannt und anschließend kontinuierlich bei einem Druck von 10⁻⁶ mbar mit 2 nm Pd bedampft. Durch Rückspulen des Gewebes wurde dieses in einem zweiten Bedampfungsschritt mit 0,7 nm Bi belegt. Nach dem Aufdampfen wurde das Katalysatorvorprodukt 30 Minunten bei 600 °C in einer Elektromuffel formiert.

Dazu wurde der Temperofen in 40 Minuten auf 600 °C aufgeheitzt, 30 Minuten bei dieser Temperatur gehalten und dann abgeschaltet. Nach dem Erkalten wurde der Katalysator aus der Muffel entnommen und zu einem Monolithen verformt. Hierzu wurden 41,5 cm glattes Gewebe mit einer Zahnradwalze wellenartig verformt und mit 38 cm glattem Gewebe zusammengelegt und aufgerollt. Man erhielt so einen Monolithkatalysator mit einem Volumen von 67 cm³.

## Patentansprüche

1. Verwendung einer Katalysatorpackung, die herstellbar ist durch Aufdampfen und/oder Sputtern mindestens einer als Katalysator und/oder Promotor aktiven Substanz auf Gewebe, Gestricke oder Folien als Trägermaterial, in einem Verfahren zur katalytischen Destillation, bei dem eine heterogen-katalytische Reaktion mit einer gleichzeitigen Destillation oder Rektifikation an der Katalysatorpackung kombiniert ist.

2. Verwendung nach Anspruch 1, **dadurch gekennzeichnet, daß** die Katalysatorpackung aus mindestens einem Monolithen besteht, der aus dem Gewebe, Gestrick oder der Folie, die vorzugsweise in Form eines Bandes vorliegen, gebildet wird.

3. Verwendung nach Anspruch 1 oder 2, **dadurch gekennzeichnet, daß** das Gewebe, Gestrick bzw. die Folie aus Metall, vorzugsweise aus Edelstahl besteht.

4. Verwendung nach Anspruch 3, **dadurch gekennzeichnet, daß** das Gewebe, Gestrick oder die Folie vor dem Aufdampfen und/oder Sputtern für 0,5 bis 24 Stunden in sauerstoffhaltiger Atmosphäre auf eine Temperatur im Bereich von 400 bis 1100°C erhitzt wird.

5. Verwendung nach Anspruch 1 oder 2, **dadurch gekennzeichnet, daß** das Gewebe, Gestrick oder die Folie aus anorganischem Material oder Kunststoff besteht.

6. Verwendung nach einem der vorstehenden Ansprüche, **dadurch gekennzeichnet, daß** die als Katalysator aktiven Substanzen ausgewählt sind aus den Elementen der I. und/oder VII. und/oder VIII. Nebengruppe und/oder die Promotoren ausgewählt sind aus den Elementen der IV, V, VI. Hauptgruppe, II., III., VI., VII. Nebengruppe, des Periodensystems der Elemente.

7. Reaktor zur katalytischen Destillation, bei der eine heterogen-katalytische Reaktion mit einer Destillation oder Rektifikation an einer Katalysatorpackung kombiniert ist, umfassend eine Destillationskolonne, die gepackt ist mit einer Katalysatorpackung, wie sie in einem der vorstehenden Ansprüche beschrieben ist.

8. Verwendung des Reaktors nach Anspruch 7 für die katalytische Destillation gemäß einem der Ansprüche 1 bis 5.

9. Verfahren zur katalytischen Destillation, bei dem eine heterogen-katalytische Reaktion mit einer gleichzeitigen Destillation oder Rektifikation an einer Katalysatorpackung kombiniert ist, **dadurch gekennzeichnet, daß** die Katalysatorpackung hergestellt ist durch Aufdampfen und/oder Sputtern mindestens einer als Katalysator und/oder Promotor aktiven Substanz auf Gewebe, Gestricke oder Folien als Trägermaterial.

## Claims

1. Use of a catalyst packing which can be produced by vapor deposition and/or sputtering of at least one substance active as catalyst and/or promoter onto woven fabrics, knitted fabrics or sheets as support material in a process for catalytic distillation in which a heterogeneously catalyzed reaction is combined with simultaneous distillation or rectification over the catalyst packing.

2. Use as claimed in claim 1, wherein the catalyst packing comprises at least one monolith made from the woven fabric, knitted fabric or the sheet which are preferably in the form of a band.

3. Use as claimed in claim 1 or 2, wherein the woven fabric, knitted fabric or the sheet comprises metal, preferably stainless steel.

4. Use as claimed in claim 3, wherein the woven fabric, knitted fabric or the sheet is heated at from 400 to 1100°C for from 0.5 to 24 hours in an oxygen-containing atmosphere prior to the vapor deposition and/or sputtering.

5. Use as claimed in claim 1 or 2, wherein the woven fabric, knitted fabric or the sheet comprises inorganic material or plastic.

6. Use as claimed in any of the preceding claims, wherein the catalytically active substances are selected from among the elements of transition groups I and/or VII and/or VIII and/or the promoters are selected from among the elements of main groups IV, V and VI and transition groups II, III, VI and VII of the Periodic Table of the Elements.

7. A reactor for catalytic distillation in which a heterogeneously catalyzed reaction is combined with a distillation or rectification over a catalyst packing, comprising a distillation column which is packed with a catalyst packing as described in any of the preceding claims.

8. Use of the reactor as claimed in claim 7 for catalytic distillation as set forth in any of claims 1 to 5.

9. A process for catalytic distillation in which a heterogeneously catalyzed reaction is combined with a simultaneous distillation or rectification over a catalyst packing, wherein the catalyst packing is produced by vapor deposition and/or sputtering of at least one substance active as a catalyst and/or promoter onto woven fabrics, knitted fabrics or sheets as support material.

## Revendications

1. Utilisation d'un garnissage de catalyseur, qui peut être préparé par dépôt par vaporisation et/ou par pulvérisation d'au moins une substance active comme catalyseur et/ou comme promoteur sur des tissus, des tricots ou des films servant de matériau support, dans un procédé de distillation catalytique, dans lequel une réaction à catalyse hétérogène est combinée avec une distillation ou une rectification simultanée sur le garnissage de catalyseur.

2. Utilisation selon la revendication 1, **caractérisée en ce que** le garnissage de catalyseur est constitué d'au moins un monolithe, qui est formé par le tissu, le tricot ou le film, qui se trouvent de préférence sous forme d'une bande.

3. Utilisation selon la revendication 1 ou 2, **caractérisée en ce que** le tissu, le tricot ou le film est constitué de métal, de préférence de l'acier inoxydable.

4. Utilisation selon la revendication 3, **caractérisée en ce que** le tissu, le tricot ou le film est chauffé, avant le dépôt par vaporisation et/ou par pulvérisation, pendant 0,5 à 24 heures dans une atmosphère contenant de l'oxygène à une température dans la plage de 400 à 1100 °C.

5. Utilisation selon la revendication 1 ou 2, **caractérisée en ce que** le tissu, le tricot ou le film est constitué de matériau inorganique ou de matériau synthétique.

6. Utilisation selon l'une quelconque des revendications précédentes, **caractérisée en ce que** les substances actives comme catalyseur sont choisies parmi les éléments du ler et/ou du VIIème et/ou du VIIIème groupe secondaire et/ou les promoteurs sont choisis parmi les éléments du IVème, Vème, Vlème groupe principal, du IIème, IIIème, Vlème, VIIème groupe secondaire du système périodique des éléments.

7. Réacteur pour la distillation catalytique dans lequel une réaction en catalyse hétérogène est combinée avec une distillation ou une rectification sur un garnissage de catalyseur, comprenant une colonne de distillation, qui est garnie avec un garnissage de catalyseur tel qu'il est décrit dans l'une quelconque des revendications précédentes.

8. Utilisation du réacteur selon la revendication 7 pour la distillation catalytique selon l'une quelconque des revendications 1 à 5.

9. Procédé pour la distillation catalytique, dans lequel une réaction en catalyse hétérogène est combinée avec une distillation ou une rectification simultanée sur un garnissage de catalyseur, **caractérisé en ce que** le garnissage de catalyseur est préparé par dépôt par vaporisation et/ou par pulvérisation d'au moins une substance active comme catalyseur et/ou comme promoteur sur des tissus, des tricots ou des films comme matériau support.
